# EUROPEAN PATENT SPECIFICATION

(11) **EP 0 703 381 B1**
(45) Date of publication and mention of the grant of the patent: **11.04.2001**
(21) Application number: 94830451.4
(22) Date of filing: 22.09.1994
(51) Int. Cl.: F16D 65/56

(54) **Adjuster sleeve**
Nachstellhülse
Douille de rajustage

(43) Date of publication of application: 27.03.1996
(73) Proprietor: ROCKWELL INTERNATIONAL CORPORATION, Pittsburgh, Pennsylvania 15222-3123 (US)
(72) Inventor: Forni, Roberto, I-28062 Cameri, Novara (IT); Harrup, Clive, Bromham, Bedfordshire MK43 8JA (GB)
(74) Representative: Leiser, Gottfried, Dipl.-Ing.

(56) References cited:
- WO-A-81/00835
- WO-A-91/19115
- DE-A- 4 131 630
- DE-A- 4 131 631

## Description

### FIELD OF THE INVENTION

This invention relates to a caliper assembly for a disc brake and more specifically to an assembly which provides for adjustment thereof to compensate for wear of the friction materials utilized therein.

### DESCRIPTION OF THE RELATED ART

Adjustment mechanisms for disc brake systems have been used previously. An example of such a mechanism is described in German patent application DE 41 31 630 A1, which defines the closest prior art, and DE 41 31 631 A1. The mechanism includes a disc brake caliper housing which defines a cavity containing a force application system which converts rotary motion into reciprocating motion by means of an eccentric causing reciprocation of a force application member. The system described therein teaches a pair of adjustable length pistons threadably engaging annularly displaced threaded bores of the force application member. The axially extending dimension between the force application member and the backing plate of the friction pad may be adjusted to compensate for wear in the friction pad by rotation of the threaded pistons. The pistons are rotated by engagement with a splined shaft which extends into a cooperating spline defined in a bore thereof. The adjustment mechanism which provides rotation of the splined shaft is carried on the caliper housing, necessitating a floating and telescoping relation between the spline defined in the internal bore of the pistons and the splined shaft. Such a splined connection presents a design and manufacturing complexity which adds cost to the final product. In addition, an expensive combination reciprocation and rotational seal must be used to prevent contamination from the environment and/or passage of lubrication from the cavity defined in the brake caliper housing. Therefore, it is an object of the present invention to provide a caliper assembly which does not require a splined connection to the adjustment mechanism or a combination reciprocation and rotational seal.

This object is achieved by a caliper assembly according to claim 1.

### SUMMARY OF THE PRESENT INVENTION

The present invention includes a caliper assembly for a disc brake having opposed friction pads at least one of which may be axially displaced into engagement with a rotor rotatably maintained about an axis and drivingly associated with a vehicle wheel. The caliper assembly includes an eccentric which is bearingly carried in the caliper housing and rotatably engaged to a reciprocating element to convert rotation of the eccentric into a reciprocating motion. The eccentric is rotated by a pivoted lever deriving motive force from an actuation means such as an air actuated cylinder. The reciprocating element defines a first face and has first and second annularly displaced axially extending bores. Adjustable length sleeve assemblies are located in the first and second bores with portions extending axially therefrom and connected to a load plate. The load plate defines an annularly extending axially displaced second face which may be axially positioned relative to the first face by adjustment of the length of the sleeve assemblies. The sleeve assemblies each feature a first cylindrical member having a first end defining a head and a second end having threads defined on the external surface thereof. A second cylindrical member having an opening defining a bore has threads defined on the internal surface thereof which cooperate with respective threads defined on the external surface of the first cylindrical member. The second cylindrical member includes a first end portion having an external surface which is rotatably received within one of the bores of the reciprocating element and a second opposing end defining a radially extending head located thereon defining a limit of axial displacement toward the first face of the load plate. The second cylindrical member is drivingly associated with an adjusting gear that may be used to define a coordinated relative rotary position between the first and second cylindrical members. Controlling the respective relative rotary position of the first and second cylinders is the technique by which the axially extending dimension of the adjustable length sleeve assemblies of the present invention is accomplished. The relative rotational position of the adjusting sleeve components establishes the dimensional relationship between the first face of the reciprocating element and the second face of the load plate thereby accomplishing definition of the working clearance between the friction pad and rotor.

These and other aspects of the present invention will become more readily apparent by reference to the following detailed description of the embodiments as shown in the drawings.

### BRIEF DESCRIPTION OF THE DRAWINGS

Figure 1 is an exploded view of the components of the present invention;
Figure 2 is a side view of the eccentric assembly of the present invention;
Figure 3 is a plan view of the eccentric assembly of the present invention;
Figure 4 is a cross sectional view of the present invention.
Figure 5 is a perspective view of the load plate and piston interface;
Figure 6 is a fragmented view of the piston incorporated in the present invention;
Figure 7 is a perspective view of the clip used to secure the load plate to the piston;
Figure 8 is a plan view of the rigid lever of the present invention;
Figure 9 is a cross sectional view of the adjuster mechanism of the present invention;
Figure 10 is an exploded view of the adjuster mechanism of the present invention; and
Figures 11, 12 and 13 are sequential views of the interaction of the rigid lever, the resilient lever and the reaction lever of the present invention in various stages of operation.

### DETAILED DESCRIPTION OF THE PREFERRED EMBODIMENT

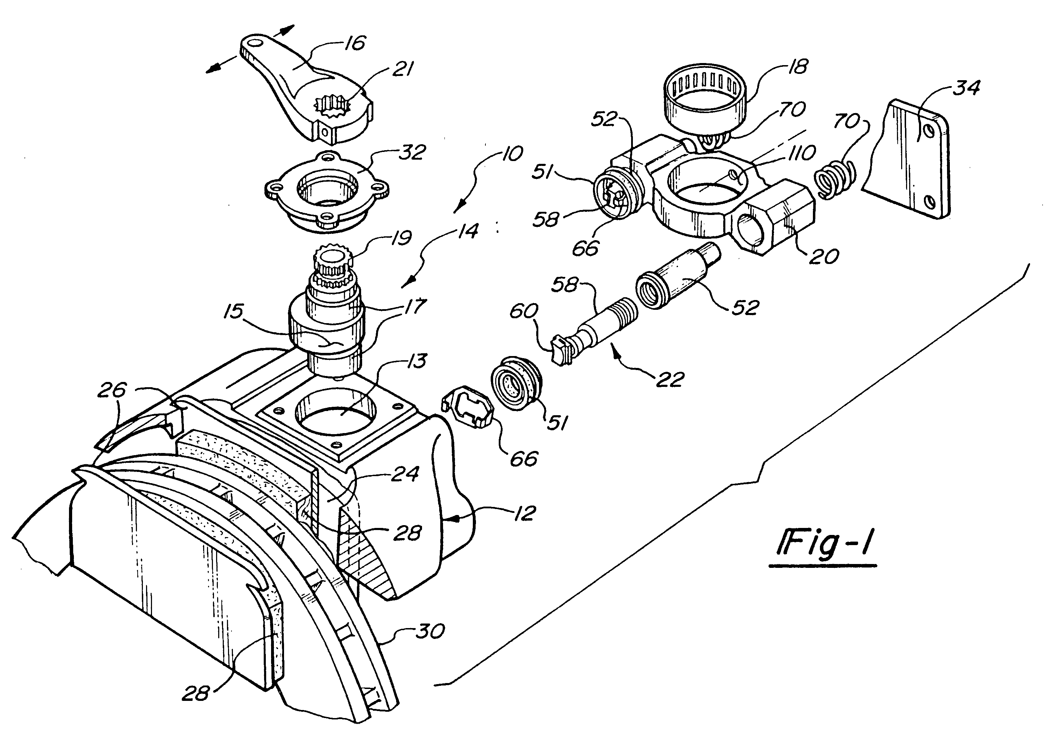

The preferred embodiment of the present invention as shown in Figure 1 includes a brake assembly 10 comprising caliper housing 12 defining a cavity 13. Eccentric assembly 14 includes eccentric 15 which is supported for rotation by sliding bearing journals 17,17. Eccentric assembly 14 further includes male spline 19 cooperating with female spline 21 formed on actuating lever 16. Motive force for actuation of the present invention is provided by a reciprocating actuator (not shown) applying a pivoting force to lever 16. Eccentric bearing retainer 32 defines and maintains the axis of rotation of eccentric assembly 14 within caliper housing 12. Eccentric bearing 18 is located within bore 110 formed in reciprocating element 20 to facilitate a low friction conversion of rotary motion of eccentric assembly 14 to reciprocating motion of reciprocating element 20. A pair of annularly displaced adjusting sleeve assemblies 22,22 are maintained within bores 38,38 defined in reciprocating element 20. Adjusting sleeve assemblies 22,22 are secured by clips 66,66 to load plate 24 which transmits force through backing plate 26 into friction material 28 upon application of force by reciprocating element 20. In such a manner, friction material 28 is displaced into engagement with rotor 30 to retard rotation of same. Cover plate 34 and reciprocating seals 51,51 define a closed structure sealing cavity 13 of caliper housing 12.

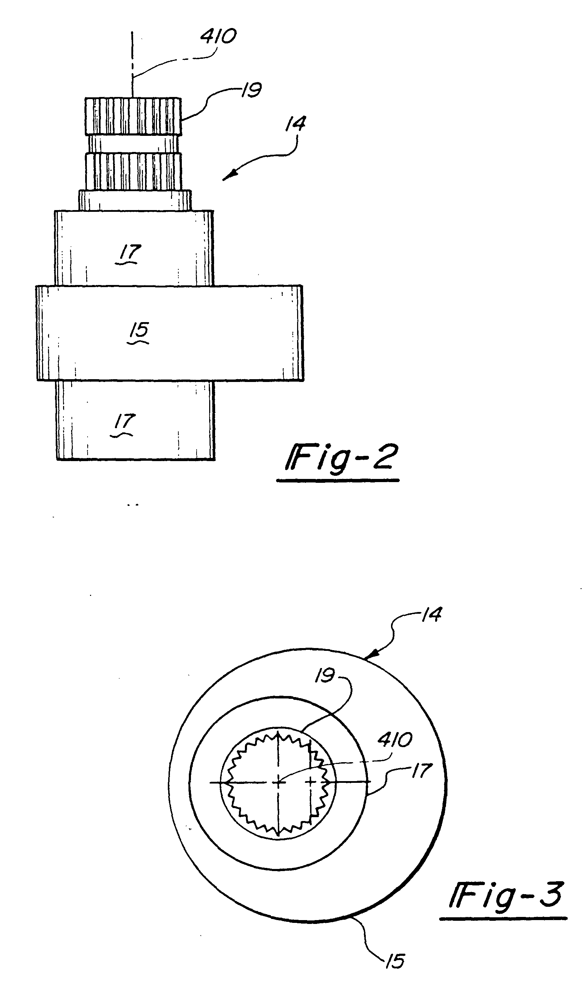

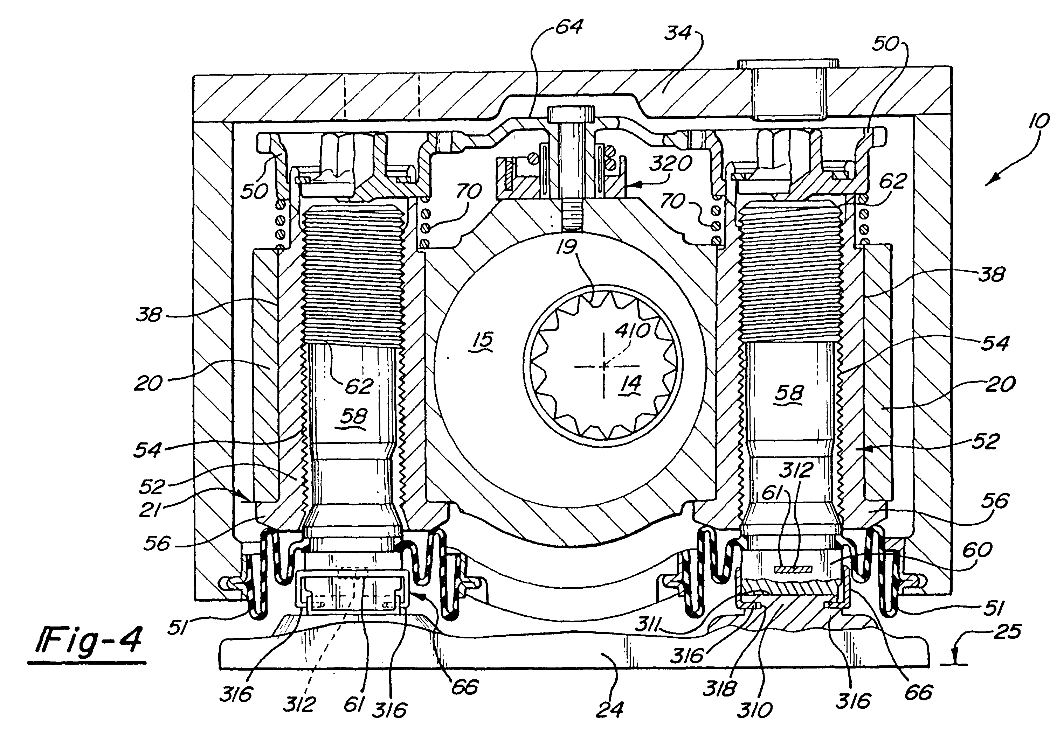

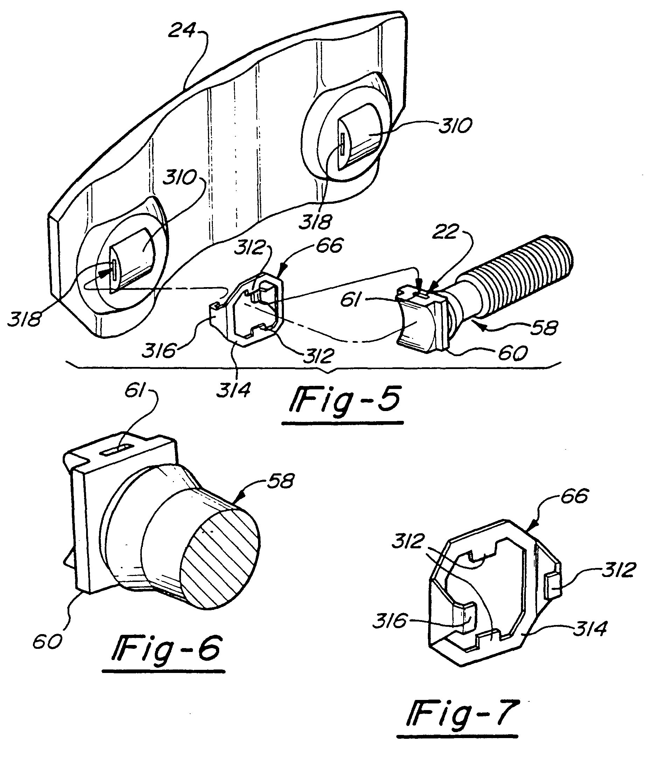

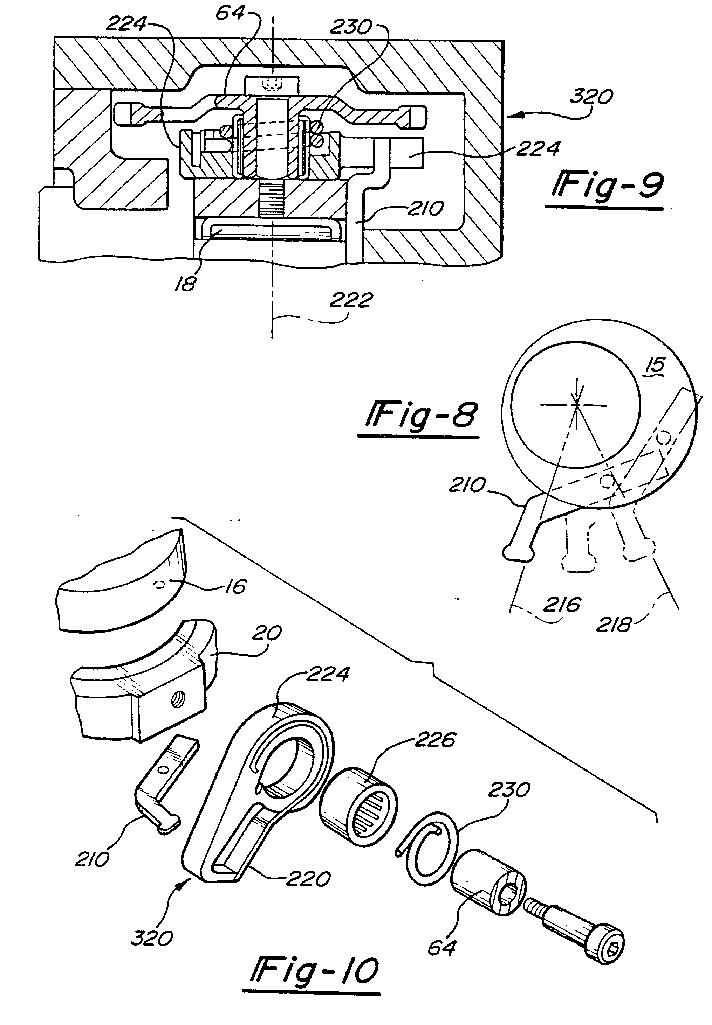

Figure 2 is a side view of eccentric assembly 14, whereas Figure 3 is a plan view thereof, demonstrating eccentric 15 with respect to axis 410 of eccentric assembly 14. Figure 4 is a plan view/cross-sectional view of reciprocating element 20 and adjustable sleeve assemblies 22,22. Reciprocating element 20 defines a reference face 21 from which the position of face 25 of load plate 24 is selectably adjusted. Such an adjustment is accomplished by controlling the dimension therebetween as a result of relative rotation of sleeve 52 with respect to piston 58. Sleeve 52 is maintained in low friction rotatable relation in bore 38 of reciprocating element 20. Annular head 56 is maintained in contact with face 21 by urging of spring 70. Gear 50 is drivingly connected to sleeve 52 by means of a press fit. Adjusting gear 64 is engageable with gear 50 to define a synchronized relative rotational position between piston 58 and sleeve 52 of each sleeve assembly 22,22. Piston 58 includes piston head 60 which may be secured to load plate 24 by clip 66. Load plate 24 includes annularly displaced semicylindrical projections 310 each defining a simple curved surface which cooperate with respective curved surfaces 311,311 defined on piston head 60 to establish a line-point of contact therebetween to transmit force to friction pad 28. (See Figure 5). Recesses 61,61 as shown in Figures 5 and 6 formed on opposite sides of piston head 60 receive inwardly directed tabs 312,312 of clip 66, as shown in Figure 7. Annular portion 314 of clip 66 surrounds piston head 60 and semicylindrical projections 310 and further includes axially displaced inwardly directed tabs 316 which engage recesses 318, 318. Recesses 61 and 318 provide a dimensionally greater depth than required by tabs 312 and 316 thereby permitting a degree of horizontal and vertical movement. All other dimensional relations between recesses 61 and 318 and tabs 312 and 316 conform closely to provide an anti-rotation effect. Clip 66,66 thereby establish an antirotational effect while permitting a range of relative displacement which additionally provides a self aligning relation of piston.

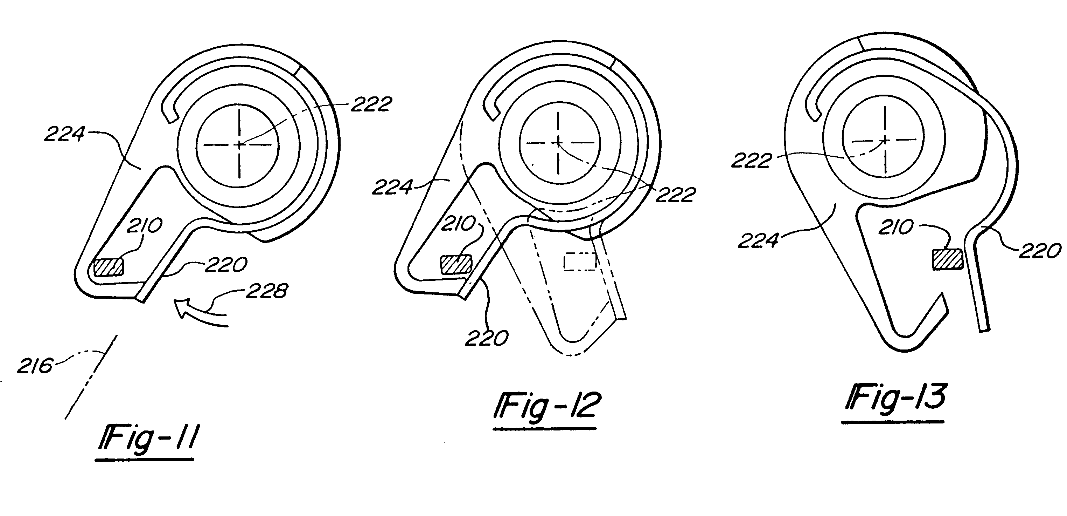

The relative rotary position of female thread 54 and male thread 62 define the relative axial length of sleeve assemblies 22,22 and resultantly the dimension between face 21 and face 25. Adjusting gear 64 may be selectively rotated by an adjustment mechanism 320 which derives motive force by harnessing angular displacements of lever 16 which exceed that which is necessary to displace friction pad 28 through a clearance dimension into engagement with rotor 30. A rigid lever 210 is secured to eccentric 15 as shown in Figure 8. Actuation of eccentric 16 produces a corresponding displacement of rigid lever 210 through a range of angular displacement beginning at locus 216 and ending at locus 218. The outermost radial portion of rigid lever 210 engages resilient lever 220 which is rotatably disposed about axis 222 of adjusting gear 64. Resilient lever 220 is drivingly engaged with reaction member 224 which is also drivingly engaged to one-way clutch 226 via torque limiting device 230. The desired rotary position of adjusting gear 64 is accomplished by the interaction of rigid lever 210 and resilient lever 220. Resilient lever 220 is preloaded in direction 228 against reaction member 224. The preload is a result of deformation of resilient member 220 against reaction member 224. The preload magnitude is preferably equal to the force necessary to generate the torque required to drive the adjustment system while in free running mode. Such resistance of the adjustment system is a result of gear and thread engagements, bearing losses, etc. Rigid lever 210 as shown in Figures 11-13 is angularly displaced from locus 216 through a first angle before engaging resilient lever 220 as shown in Figure 12. Upon the engagement of rigid lever 210 and resilient lever 220, reaction member 224 will be driven a corresponding angular displacement. When the angular displacement of reaction member 224 corresponds to the displaced position at which no clearance exists between friction pad 28 and rotor 30, continued displacement of rigid lever 210 as a result of system deflection will overcome the preload of resilient member 220 deforming same as shown in Figure 13.

In the preferred embodiment, one-way clutch 226 is a zero backlash free clutch enabling rotation in one direction with no torque/rotation transmitted in the opposite direction and the torque limiting device 230 is a coil spring wound about an external radial surface of one-way clutch 226. A first end of the wire used to construct the coil spring is driven by engagement with reaction member 224. A second end of the wire used to construct the coil spring is terminated as a coil loop ending on the external surface of one-way clutch 226. The coil is wound to an internal diameter slightly smaller than the external diameter of one-way clutch 226 thereby establishing a positive transmission of torque therethrough. The coil is wound and installed such that transmission of torque therethrough to accomplish adjustment tightens the coil around the external surface of one-way clutch 226. Upon release of brake force, eccentric 16 will return to an unactuated position consequently returning rigid lever 210 to beginning locus 216. Rigid lever 210 drives reaction member 224 to the unactuated position.

When friction pad 28 is sufficiently worn to require replacement, adjustment gear 64 must be de-adjusted or reversed to permit removal. Such may be accomplished by securing an appropriately sized wrench to adjusting gear 64 or either gear 50,50 and rotating the adjustment gear in the de-adjust direction. The de-adjust function is accomplished when torque has been applied which exceeds the torque threshold of torque limiting device 230 causing the coil to slip on the external surface of one-way clutch 226. In this operation, no damaging torques are imposed upon adjustment mechanism 320.

## Claims

1. A caliper assembly for a disc brake including opposed friction pads (28) at least one of which may be axially displaced into engagement with a rotor rotatably maintained about an axis and drivingly associated with a vehicle wheel, said caliper assembly including an eccentric assembly (14) in an eccentric bearing (18) carried in a caliper housing (12) and rotatably engaged to a reciprocating element (20) to convert rotation of said eccentric assembly (14) to a reciprocating motion; said reciprocating element (20) defining an axially disposed first face (21) and further having first and second annularly displaced axially extending bores (38), said caliper assembly including sleeve assemblies (22) disposed in said first and second bores (38) with portions extending therefrom connected by a structural member (24); said structural member (24) defining an annularly extending axially disposed second face (25) which may be axially displaced from said first face (21) by adjustment of the axially extending dimension of said sleeve assemblies (22), wherein said sleeve assemblies comprise:
a first axially extending cylindrical member (58) having an external surface including threads (62) defined on a first end portion and an opposing end portion (60) disposed in contact with said structural member (24);
a second axially extending cylindrical member (52) having an opening defining a bore having threads (54) formed on the surface thereof for threadly receiving said threads (62) defined on the external surface of said first cylindrical member (58);
said second cylindrical member (52) including a first end portion having an external surface rotatably engageable with one of said first and second bores (38) and a second end (56) defining a radially extending portion disposed thereon defining a limit of axial displacement toward said first face (21); and
means (320) to control a relative rotary position between said first and second cylindrical members (58,52) by relative rotation of said second member (52) with respect to said first cylindrical member (58) thereby accomplishing said adjustment of said sleeve assemblies (22).

2. The caliper assembly according to claim 1, wherein said opposing end of said first axially extending cylindrical member (58) is engaged with said structural member (24) and maintained non-rotatable with respect to any axially extending axis defined therethrough.

3. The caliper assembly according to claim 1 or 2, wherein said second end of said second cylindrical member (52) is urged into contact with said first face (21) of said reciprocating means (20) by a compliant means (70).

4. The caliper assembly according to any of the preceding claims, wherein said sleeve assemblies (22) are sealingly connected to said caliper housing (12) by a reciprocating seal (51).

5. The caliper assembly according to any of the preceding claims, wherein said means to control a relative rotary position between said first and second cylindrical members (58, 52) of said sleeve assemblies (22) comprises a first gear (50) drivingly connected to said first cylindrical member (58) and drivingly engageable with a further gear (64) wherein said further gear (64) may be rotated to a predetermined rotary position.

6. The caliper assembly according to any of the preceding claims, wherein said first and second angularly displaced axially extending bores (38) include first and second sleeve assemblies (22) disposed therein and said means to control a relative rotary position between said first and second cylindrical members (58, 52) of said first and second sleeve assemblies (22) includes a first gear (50) drivingly connected to a first cylindrical member (58) of said first sleeve assembly (22) and a second gear (50) drivingly connected to a first cylindrical member (58) of said second sleeve assembly (22) and wherein said first and second gears (50) are drivingly engageable to a third gear (64) which is rotatable to a predetermined position to accomplish control of the relative rotary position between said first and second cylindrical members (58, 52).

## Patentansprüche

1. Sattelbaugruppe für eine Scheibenbremse mit einander gegenüberliegenden Bremsbelägen (28), von denen wenigstens einer axial zum Angriff an einen Rotor verlagert werden kann, der um eine Achse drehbar gehaltert ist und triebschlüssig einem Fahrzeugrad zugeordnet ist, wobei die Sattelbaugruppe eine Exzentervorrichtung (14) in einem Exzenterlager (18) enthält, das in einem Sattelgehäuse (12) getragen und mit einem sich hin- und herbewegenden Element (20) in Dreheingriff ist, um eine Drehbewegung der Exzentervorrichtung (14) in eine Hin- und Herbewegung umzuwandeln; wobei das sich hin- und herbewegende Element (20) eine axial angeordnete erste Fläche (21) definiert und außerdem eine erste und zweite in Bezug auf einen Ring versetzte, sich axial erstreckende Bohrung (38) aufweist, wobei die Sattelbaugruppe Hülsenvorrichtungen (22) enthält, die in der ersten und zweiten Bohrung (38) angeordnet sind, mit aus ihnen herausragenden Abschnitten, die durch ein Bauteil (24) verbunden sind; wobei das Bauteil (24) eine sich ringförmig erstreckende, axial angeordnete zweite Fläche (25) definiert, die von der ersten Fläche (21) durch eine Verstellung der Größe der axialen Erstreckung der Hülsenvorrichtungen (22) axial weg verlagert werden kann, wobei die Hülsenvorrichtungen enthalten:
ein erstes, sich axial erstreckendes zylindrisches Teil (58), das eine Außenfläche mit einem an einem ersten Endabschnitt gebildeten Gewinde (62) und einen entgegengesetzten Endabschnitt (60) aufweist, der sich in Kontakt mit dem Bauteil (24) befindet,
ein zweites, sich axial erstreckendes zylindrisches Teil (52) mit einer Öffnung, die eine Bohrung mit einem an ihrer Oberfläche ausgebildeten Gewinde (54) definiert, um das an der Außenfläche des ersten zylindrischen Teils (58) definierte Gewinde (62) geschraubt aufzunehmen;
wobei das zweite zylindrische Teil (52) einen ersten Endabschnitt, der eine Außenfläche aufweist, die drehbar mit der ersten und zweiten Bohrung (38) in Eingriff bringbar ist, und ein zweites Ende (56) enthält, das einen daran angeordneten, sich radial erstreckenden Abschnitt definiert, der eine Begrenzung der axialen Verschiebung in Richtung zur ersten Fläche (21) definiert; sowie
Mittel (320) zur Steuerung einer relativen Drehposition zwischen dem ersten und dem zweiten zylindrischen Bauelement (58,52) durch eine relative Drehung des zweiten Teils (52) in Bezug auf das erste zylindrische Teil (58), wodurch die Verstellung der Hülsenvorrichtungen (22) erreicht wird.

2. Sattelbaugruppe nach Anspruch 1, bei welcher das entgegengesetzte Ende des ersten, sich axial erstreckenden zylindrischen Teils (58) mit dem Bauteil (24) in Eingriff ist und in Bezug zu jeder sich axial erstreckenden Achse, die dort hindurch definiert ist, drehfest gehalten ist.

3. Sattelbaugruppe nach Anspruch 1 oder 2, bei welcher das zweite Ende des zweiten zylindrischen Teils (52) durch ein nachgiebiges Mittel (70) in Kontakt mit der ersten Fläche (21) des sich hin- und herbewegenden Mittels (20) gedrängt ist.

4. Sattelbaugruppe nach einem der vorhergehenden Ansprüche, bei welcher die Hülsenvorrichtungen (22) mit dem Sattelgehäuse (12) durch eine sich hin- und herbewegende Dichtung (51) abgedichtet verbunden sind.

5. Sattelbaugruppe nach einem der vorhergehenden Ansprüche, bei welcher die Mittel zur Steuerung einer relativen Drehposition zwischen dem ersten und dem zweiten zylindrischen Teil (58, 52) der Hülsenvorrichtungen (22) ein erstes Zahnrad (50) aufweisen, das triebschlüssig mit dem ersten zylindrischen Teil (58) verbunden ist und triebschlüssig mit einem weiteren Zahnrad (64) in Eingriff gebracht werden kann, wobei das weitere Zahnrad (64) in eine vorbestimmte Drehposition gedreht werden kann.

6. Sattelbaugruppe nach einem der vorhergehenden Ansprüche, bei welcher die erste und die zweite sich axial erstreckende, in Bezug auf einen Ring versetzte Bohrung (38) darin angeordnete erste und zweite Hülsenvorrichtungen (22) enthalten und die Mittel zur Steuerung einer relativen Drehposition zwischen dem ersten und dem zweiten zylindrischen Teil (58, 52) der ersten und der zweiten Hülsenvorrichtung (22) ein erstes Zahnrad (50) enthalten, das triebschlüssig mit einem ersten zylindrischen Teil (58) der ersten Hülsenvorrichtung (22) verbunden ist, und ein zweites Zahnrad (50), das triebschlüssig mit einem ersten zylindrischen Teil (58) der zweiten Hülsenvorrichtung (22) verbunden ist, und wobei das erste und das zweite Zahnrad (50) triebschlüssig mit einem dritten Zahnrad (64) in Eingriff gebracht werden können, das in eine vorbestimmte Position drehbar ist, um die Steuerung der relativen Drehposition zwischen dem ersten und dem zweiten zylindrischen Teil (58, 52) zu erreichen.

## Revendications

1. Etrier pour un frein à disque comprenant des plaquettes de friction opposées (28), au moins une d'entre elles pouvant se déplacer axialement en engagement avec un rotor maintenu rotatif suivant un axe et commandé en association avec une roue de véhicule, ledit étrier comprenant un assemblage excentrique (14) inséré dans un roulement excentrique (18) engagé dans un corps d'étrier (12) et relié en rotation à un élément de va-et-vient (20) pour transformer la rotation dudit assemblage excentrique (14) en un mouvement alternatif, ledit élément de va-et-vient (20) délimitant une première face (21) disposée axialement et de plus ayant un premier et un second alésages (38) s'étendant axialement et décalés annulairement, ledit étrier comprenant des assemblages manchonnés (22) disposés dans lesdits premier et second alésages (38) avec des parties débordantes de ces derniers pour se connecter à une structure (24), ladite structure (24) délimitant une seconde face (25) disposée axialement et s'étendant annulairement qui peut se déplacer axialement de ladite première face (21) par réglage des dimensions de coulissement axial desdits assemblages manchonnés (22), caractérisé en ce que lesdits assemblages manchonnés comprennent :
- un premier élément cylindrique (58) s'étendant axialement comportant une surface externe munie d'un filetage (62) pratiqué sur une première extrémité et une extrémité opposée (60) placée en contact avec ladite structure (24),
- un second élément cylindrique (52) s'étendant axialement et ayant une ouverture délimitant un alésage comportant un filetage (54) usiné sur la surface de celui-ci pour recevoir par vissage ledit filetage (62) usiné sur la surface externe dudit premier élément cylindrique (58),
- ledit second élément cylindrique (52) comprenant une première extrémité ayant une surface externe coopérant par rotation avec un desdits premier et second alésages (38) et une seconde extrémité (56) délimitant une partie coulissant radialement usinée dans celle-ci pour limiter le déplacement axial vers ladite première face (21), et
- des moyens (320) pour contrôler une position de rotation relative entre lesdits premier et second éléments cylindriques (58, 52) en effectuant une rotation relative dudit second élément (52) par rapport audit premier élément cylindrique (58) pour réaliser ainsi ledit réglage desdits assemblages manchonnés (22).

2. Etrier selon la revendication 1, dans lequel
ladite extrémité opposée du premier élément cylindrique (58) s'étendant axialement est solidaire de ladite structure (24) et est maintenue non rotative par rapport à tout axe coulissant axialement défini par celui-ci.

3. Etrier selon la revendication 1 ou 2, dans lequel
ladite seconde extrémité dudit second élément cylindrique (52) est maintenue en contact avec ladite première face (21) des moyens de va-et-vient (20) par un moyen de compression (70).

4. Etrier selon l'une quelconque des revendications précédentes, dans lequel lesdits assemblages manchonnés (22) sont connectés de manière étanche au-dit corps d'étrier (12) par un joint de va-et-vient (51).

5. Etrier selon l'une quelconque des revendications précédentes, dans lequel lesdits moyens pour contrôler une position de rotation relative entre lesdits premier et second éléments cylindriques (58, 52) desdits assemblages manchonnés (22) comprennent un premier engrenage (50) connecté en entraînement au-dit premier élément cylindrique (58) et engagé en entraînement avec un autre engrenage (64) dans lequel ledit engrenage (64) peut être entraîné en rotation dans une position de rotation prédéterminée.

6. Etrier selon l'une quelconque des revendications précédentes, dans lequel lesdits premier et second alésages (38), s'étendant axialement et décalés annulairement comprennent les premier et second assemblages manchonnés (22) disposés à l'intérieur de ceux-ci et lesdits moyens de contrôle de la position relative de rotation entre lesdits premier et second éléments cylindriques (58, 52) desdits premier et second assemblages manchonnés (22), comprennent un premier engrenage (50) connecté en entraînement à un premier élément cylindrique (58) dudit premier assemblage manchonné (22) et un second engrenage (50) connecté en entraînement à un premier élément cylindrique (58) dudit second assemblage manchonné (22) et en ce que lesdits premier et second engrenages (50) sont engagés sur un troisième engrenage (64) qui est amené par rotation dans une position prédéterminée pour contrôler la position de rotation relative entre lesdits premier et second éléments cylindriques (58, 52).
